# EUROPEAN PATENT SPECIFICATION

(11) **EP 0 731 995 B1**
(45) Date of publication and mention of the grant of the patent: **08.10.1997**
(21) Application number: 95902184.1
(22) Date of filing: 29.11.1994
(51) Int. Cl.: H01R 13/719, H04B 3/32

(54) **REDUCING CROSSTALK CONNECTOR**
DAS ÜBERSPRECHEN VERMINDERNDER VERBINDER
DISPOSITIF DE RACCORDEMENT REDUISANT LA DIAPHONIE

(30) Priority: 03.12.1993 GB 9324816
(43) Date of publication of application: 18.09.1996
(73) Proprietor: ITT INDUSTRIES LIMITED, Hampshire RG22 4BW (GB)
(72) Inventor: PINNEY, David Ralph, Newbury, Berkshire RG16 7DF (GB); STANTON, Kevin, Northamptonshire NN15 5AZ (GB)
(74) Representative: Vaufrouard, John Charles
(86) International application number: PCT/GB94/02606
(87) International publication number: WO 95/15598

(56) References cited:
- EP-A- 0 525 703
- EP-A- 0 558 225
- WO-A-93/19500
- WO-A-94/05092

## Description

This invention relates to an electrical connector in which crosstalk between two or more pairs of signal carrying contacts is reduced.

There is a problem in connectors designed for interconnecting multiple pairs of conductors, where each pair are required to carry individual signals, as there is the risk of electromagnetic cross coupling of signals due to electrostatic (capacitive) or magnetic (induction) coupling. Such cross coupling is called crosstalk and becomes worse as frequencies of signals are increased. The crosstalk results from the capacitive and inductive coupling between nearest lines of the pair which dominates the opposite phase and cancelling effect from the furthest lines of the other pair of a balanced two wire system. This results in effectively a differential capacitance between each line of each pair and the lines of the other pair. The problem is sometimes worsened by wiring conventions for example in the EIA/TIA 568B wiring practice for an eight contact in line connector, contacts 1 & 2 form the orange pair, contacts 3 & 6 form the green pair, contacts 4 & 5 form the blue pair and contacts 7 & 8 form the brown pair. It will be appreciated that in such a configuration crosstalk is a major problem between blue and green pairs as each line of each pair lies adjacent a line of the other pair and there is electrostatic and electromagnetic coupling between them. To a lesser extent there is coupling between green and both orange and brown because one line of each pair lies adjacent a line of the other pair.

Attempts have been made to reduce the effect of crosstalk in adjacent lines of electrical connectors. For example in AT&T European Patent Application Number 93301116.5 (EP-A1-0 558 225) there is disclosed an arrangement in which adjacent terminals of a connector are crossed over by a re-entrant bend midway between their ends so that they run half way in one spaced disposition and half way in the opposite disposition so that cross talk is induced in opposite halves of the contacts in opposite phase to effect cancellation. Such an arrangement is difficult to manufacture in view of the requirement of linking by re-entrant bends and the cross over point is extremely critical.

Another technique is disclosed in Siemens European Patent Application Number 92112808.8 (EP-A1-0 525 703) in which a connector employs a printed circuit board coupling with a double cross over of interfering lines again so that there is anti-phase coupling of crosstalk for cancellation purposes. This arrangement both requires a printed circuit board and multiple crossing arrangements on the board. Alternative arrangements are described where discrete capacitance or inductive coupling between the non interfering lines of a pair to the line experiencing crosstalk is provided with a view to injecting an opposing crosstalk component. The use of discrete components is inconvenient and costly.

The present invention seeks to provide an electrical connector with crosstalk compensation which is reliable and relatively simple to manufacture and using no discrete components.

According to the invention there is provided an electrical connector comprising at least four contacts extending between input and output terminals, characterised in that an overlapping of the mutually most distant contacts of different particular assigned signal carrying pairs of said contacts is arranged to provide capacitive coupling therebetween to induce crosstalk in opposition to crosstalk induced between the mutually closest contacts of the different assigned signal carrying pairs to reduce overall crosstalk.

One of each of said most distant contacts may be provided with a lateral extension which overlies the other cooperating contact of the other pair to provide overlapping and capacitive coupling therebetween. The other of said most distant contacts may have a portion of larger surface area where the lateral extension overlies, thereby to increase the capacitive coupling therebetween. In this way the differential capacitance between the cooperating contact and each of the contacts of the other pair is reduced or ideally reduced to zero. The contacts may be spaced apart transversely of the connector the mutually most distant ones of the contacts being assigned as one signal carrying pair and the lateral extension extending inwardly.

The electrical connector may comprise a multiplicity of contacts and any four or more of said contacts selected as pairs may be provided with an overlapping of the mutually most distant contacts of the other pair or pairs to provide capacitive coupling therebetween to induce crosstalk in opposition to crosstalk induced between the mutually closest contacts of the other pair or pairs.

In a further embodiment of the invention two additional signal carrying pairs of contacts are disposed one to each side of said four contacts, and the outer contacts of said four contacts are arranged to overlap the most distant contact of the nearest additional pair to provide coupling therebetween to induce crosstalk in opposition to crosstalk induced between that outer contact and the nearest terminal of that additional pair.

The contacts may be provided some on each side of an insulating separator which forms a dielectric between overlapping contacts. The separator may be a polyimide film.

In order that the invention and its various other preferred features may be understood more easily, embodiments thereof will now be described, by way of example only, with reference to the drawings in which,
Figure 1 is a schematic diagram illustrating the major problem of crosstalk occurring in an eight contact connector,
Figure 2 is a plan view of a lead frame for providing six of the terminals of a connector constructed in accordance with the invention,
Figure 3 is a plan view of a second lead frame for providing two additional terminals of a connector constructed in accordance with the invention.
Figure 4 is a plan view showing the arrangement of the lead frames of Figures 3 & 4 mounted one each side of an insulating dielectric film,
Figure 5 is an exploded view showing the component parts of a complete connector incorporating the construction of Figure 4 and employing the features of the invention, and
Figure 6 shows the component parts of the connector of Figure 5 assembled in readiness, for the connection of insulated wires.

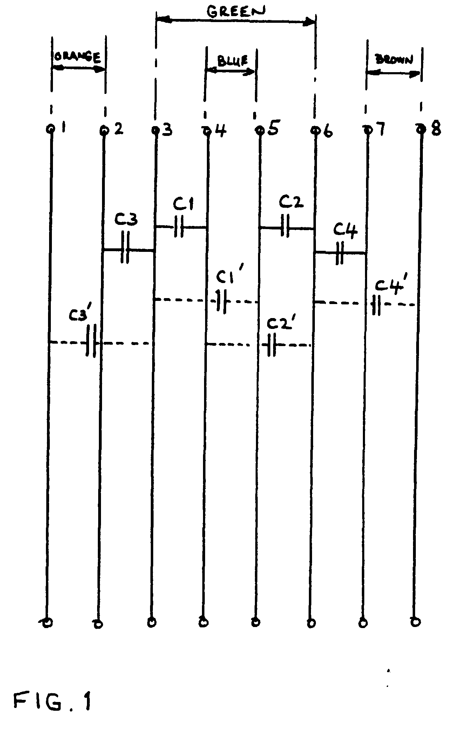

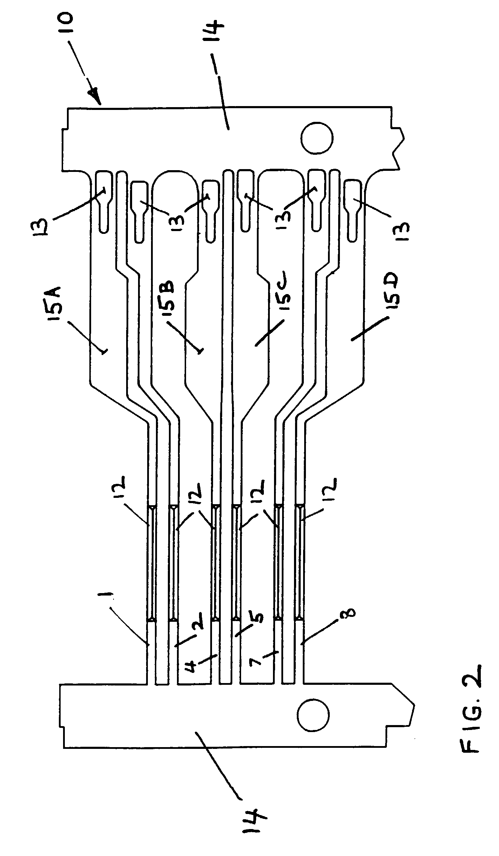

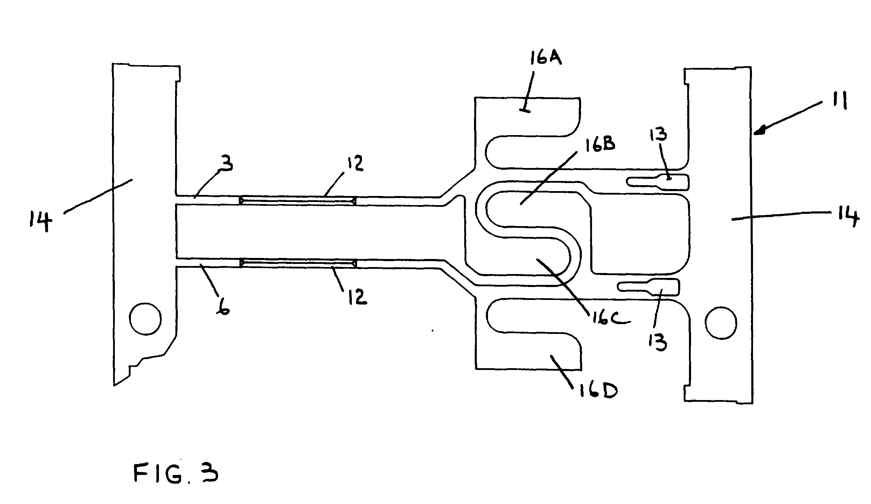

Referring to Figure 1 there is illustrated an eight terminal in line connector intended for use with the EIA/TIA 568B wiring practice. As can be seen the lines 4 & 5 and 3 and 6 are close to each other and crosstalk is induced between them by electromagnetic coupling the capacitive element of which as simulated by capacitors C₁ & C₂. In order to compensate for such crosstalk the present invention seeks to introduce crosstalk between 3 & 5 and 4 & 6 which is in antiphase to the unwanted crosstalk induced between the adjacent lines. This can be done by providing increased capacitive coupling between 3 & 5 and 4 & 6 as is shown in broken lines and identified as C₁' and C₂' respectively. There is also crosstalk between the lines 2 & 3 and 6 & 7 of adjacent pairs of terminals as represented by C₃ and C₄ and this can be similarly compensated by providing increased capacitive coupling between 1 & 3 and 6 & 7 as is shown in broken lines and identified as C₃' and C₄' respectively. The present invention is concerned with providing such compensation in a connector having four or more terminals. Referring now to Figure 2 there is shown in plan view a lead frame 10 formed by pressing from a thin sheet of metal e.g. beryllium copper to define six terminals numbered 1,2,4,5,7,8. Figure 3 shows a plan view of another lead frame 11 similarly formed to define two terminals 3 & 6. In both lead frames one end of each of the terminals is formed as an elongate tail 12 the tails running in a substantially mutually parallel disposition and the other end is provided with an elongate cut out 13 which when separated from side rail 14 defines the fork of an insulation displacement connector. It will be seen in Figure 2 that the terminals 1,4,5 & 8 have portions 15A, 15B, 15C & 15D respectively of greater width and surface area which are intended for cooperation with lateral extensions 16A, 16B & 16C, 16D provided on terminals 3 & 6 respectively as will be seen from Figure 3.

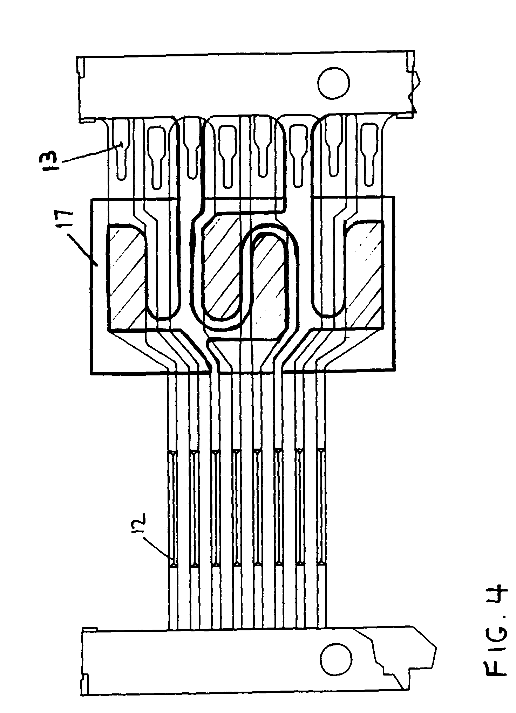

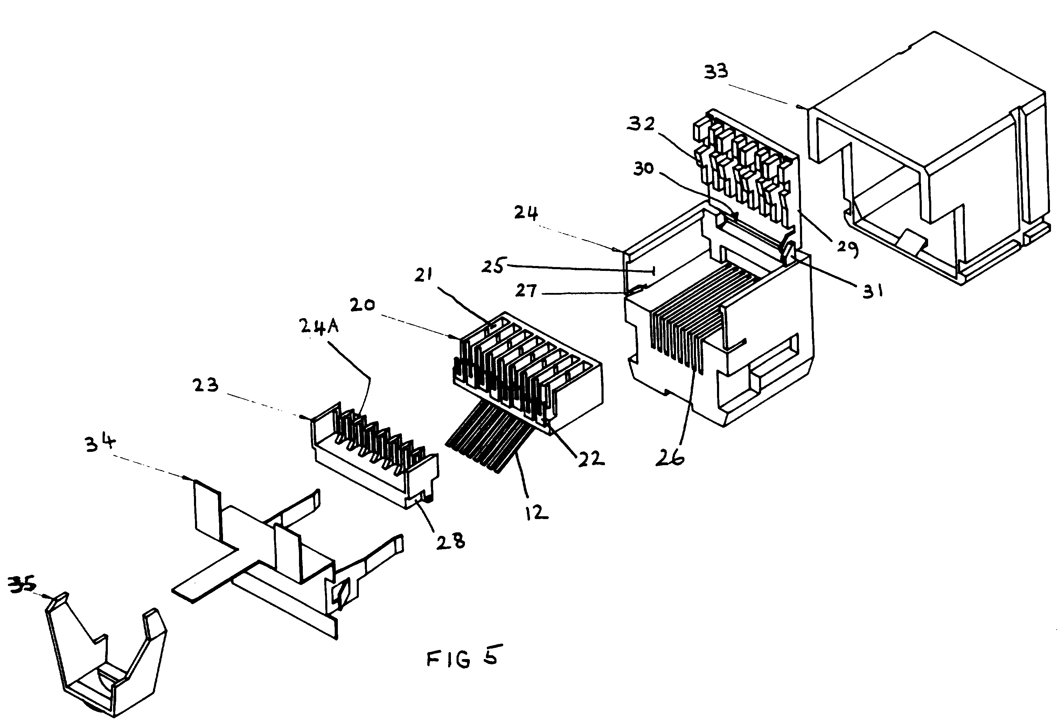

Referring now to Figure 4 there is shown in plan view how the two lead frames are mounted one on top of another separated by an insulating film 17. In the illustration the lead frame 10 is shown on the bottom and is separated from the lead frame 11 by a transparent film for ease of illustration. The film may be of any suitable dielectric material for example polyimide such as is marketed under the trade name Kapton. the film may be 0.003 inches in thickness. Accurately defined thickness, dielectric constant and control of overlap is essential if effective cancellation of crosstalk is to be accomplished. The frames are secured to the film by an adhesive for example by providing each side of the film with an acrylic coating and securing the frame thereto by heat bonding. In the drawing it can be seen that the lateral extensions 16A, 16B, 16C & 16D where they overlie the portions 15A, 15B, 15C & 15D respectively are shaded to aid identification. The central section bonded to the insulating film is now encapsulated in a plastics material which as can be seen from Figure 5, where it is identified by the number 20, is of substantially rectangular block like form provided with eight parallel elongate slots 21 which are blind at one end and are for receiving insulated wires of a connecting cable. After encapsulation the rails of the lead frame are cut away to release the tails 12 and to open the end of the cut out 13 to define an insulation displacement fork 22. The fork end is bent upwardly at right angles as shown in the drawing and the tails are bent downwardly and backwardly so that they are inclined downwardly relative to the bottom of the block 20. It will be seen from the cut outs 13 in Figure 2 that they are relatively displaced longitudinally of the terminals such that by appropriate cutting during the separating from the rails of the lead frame they define forks which project at different distances such that when bent there are rows of forks at different heights to facilitate attachment of insulated wires as will be hereinafter described.

Referring now to the exploded view of Figure 5 the various additional components and their interconnection will now be described. A strain relief element 23 of shape similar to the rectangular block is provided and has slots 24A similar to slots 21 for receiving and supporting the insulation displacement connector forks 22 and the insulated wires. As can be seen the strain relief element forms effectively a continuation of the block when the insulation displacement forks are located in its slots.

A moulded plastics housing 24 has a top provided at one side with a recess 25 which is shaped to permit slidable insertion of the block 20 and strain relief element 23. In the bottom of the recess there are provided eight parallel slots 26 which extend along the recess from the insertion end and which are spaced apart similarly to the spacing of the tails 12 where they emerge from the block 20. The slots extend through to a recess in the bottom of the housing which has at the other side of the housing an entry for receiving a cooperating connector. The slots 26 serve to each receive a tail 12, as the tail end of the block 20 is inserted into the recess 25, and to guide and separate the tails during and after insertion so that the tails are held in inclined disposition as contacts in the recess in the bottom of the housing for cooperation with a mating connector. The opposing walls of the recess 25 and the strain relief element are each provided with mutually engagable latch elements which in the described embodiments comprise inwardly tapered projections 27 on the opposing walls of the recess 25 and recesses 28 at opposite sides of the strain relief element into which the ends of the projections engage by snap action upon completion of insertion into the recess 25. Instead of providing the cooperating latch elements 28 on the strain relief element 23 they may be provided on the sides of the block 20,

The housing 24 is also provided with an upwardly extending lid 29 which is formed during the moulding thereof and is linked with the housing top by a hinge line 30 and secured in the open position by a side connection portion 31 which is severed prior to closure of the lid. The lid is provided with eight elongate projections 32 which align with the slots 21, 24A and which serve to force insulated wires, when laid in the slot, into the insulation displacement connector forks 22 and to clamp the insulated wires when the lid is fully closed as the lid closed.

An outer shell 33 formed of metal or plastics and shaped to permit snug insertion of the hinge end of the housing 24 is also provided. This shell is effective to cause the connection of wires to the insulation displacement connectors, after laying in the slots 21 of the block 20 and slots 24A in the strain relief element after insertion in the housing 24, by just pushing the housing 24 into the shell which forces the lid closed and causes the projections 32 to force the insulated wires into the forks 22 which effect insulation displacement and connection to the wire and also causes the insulation of the wires to be forced into the slots 24A of the strain relief element to aid retention of the wires. Due to the different height of the forks of the insulation displacement connectors, some of the wires are forced into their connector before others so that there is a reduction of the force necessary to close the lid and insulation displacement occurs progressively. The shell acts as an electrical screen for the connector and the screening is further enhanced by a metal cable end screen 34 and securing clip 35.

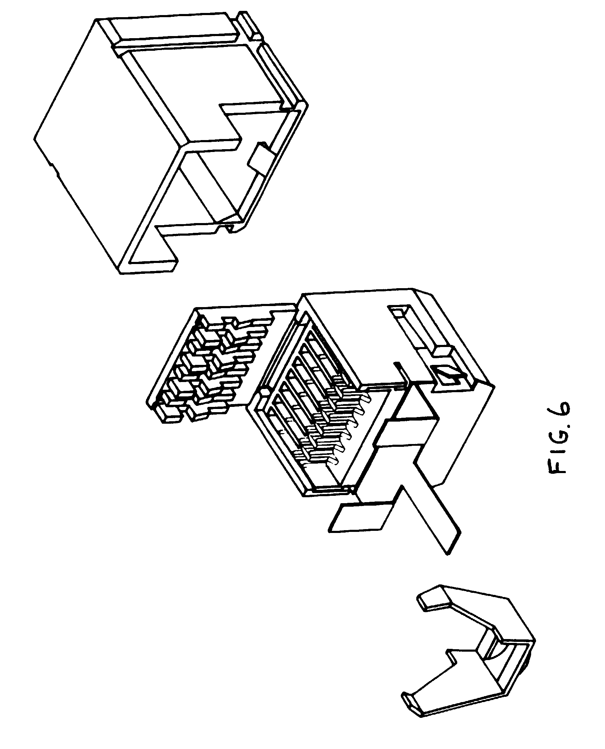

The connector components assembled ready to receive insulated wires are shown in Figure 6.

It has been found that the best compensation for crosstalk can be effected if the overlapping lateral extensions 16A-16D and wide portions 15A-15D are provided as close as possible to the tails 12.

Although the embodiment described employs four pairs of wires it will be appreciated that the invention is effective for any connectors which include two or more pairs such as 3 & 6, 4 & 5 where crosstalk is required to be reduced and can be employed in connectors having a large **number** of pairs.

In this respect crosstalk can be a problem in whatever configuration the contacts are paired. For simplicity considering a four contact in line connector the contacts being numbered 1 to 4 in sequence then the pairs can be designated as 1 & 4, 2 & 3 (similar to 3 & 6, 4 & 5, in the previously described embodiment) which is the worst case, but could be designated as 1 & 2, 3 & 4 or 1 & 3, 2 & 4. In each case there are wires close to each other relating to a different pair and crosstalk reduction or cancellation in accordance with the techniques of this invention can be effected. Such configurations are considered to fall within the scope of this invention.

The principles of the invention are applicable to connectors having large numbers of contacts and it will be appreciated that there is the possibility of crosstalk between each pair of contacts and all of the other pairs of contacts and that the principles of this invention can be applied between each pair and any one or more of the other pairs of contacts.

Although the embodiment described employs lead frames mounted onto a dielectric film it will be appreciated that alternative constructions can be employed for example the contacts may be formed on opposite sides of a printed circuit board by etching or the contacts could be printed onto a dielectric film or board by for example screen printing a metallic pattern. Such configurations are considered to fall within the scope of this invention.

## Claims

1. An electrical connector comprising at least four contacts (3,4,5,6) extending between input and output terminals (12,13), characterised in that an overlapping of the mutually most distant contacts (3 & 5, 4 & 6) of different particular assigned signal carrying pairs of said contacts (4 & 5, 3 & 6) is arranged to provide capacitive coupling therebetween to induce crosstalk in opposition to crosstalk induced between the mutually closest contacts (3 & 4, 5 & 6) of the different assigned signal carrying pairs to reduce overall crosstalk.

2. An electrical connector as claimed in claim 1, characterised in that, one (3,6) of each of said most distant contacts (3 & 5, 4 & 6) is provided with a lateral extension which overlies the other cooperating contact (5,4) of the other pair to provide overlapping and capacitive coupling therebetween.

3. An electrical connector as claimed in claim 3, characterised in that the other of said most distant contacts (5,4) has a portion (15C, 15B) of larger surface area where the lateral extension (16C, 16B) overlies, thereby to increase the capacitive coupling therebetween.

4. An electrical connector as claimed in claim 2 or 3, characterised in that the contacts (3,4,5,6) are spaced apart transversely of the connector the mutually most distant ones of the contacts (3,6) being assigned as one signal carrying pair and the lateral extension (16C, 16B) extending inwardly.

5. An electrical connector as claimed in any one of the preceding claims comprising a multiplicity of contacts, characterised in that any four or more of said contacts are selected as pairs and are provided with overlapping of the mutually most distant contacts of the other pair, or pairs, to provide capacitive coupling therebetween to induce crosstalk in opposition to crosstalk induced between the mutually closest contacts of the other pair or pairs.

6. An electrical connector as claimed in claim 4 or 5, characterised in that two additional signal carrying pairs of contacts (1 & 2, 7 & 8) are disposed one to each side of said four contacts (3,4,5,6,) and the outer contacts (3,6) of said four contacts are arranged to overlap the most distant contact (1,8) of the nearest additional pair to provide coupling therebetween to induce crosstalk in opposition to crosstalk induced between that outer contact (3,6) and the nearest terminal (2,7) of that additional pair (1 & 2, 7 & 8).

7. An electrical connector as claimed in any one of the preceding claims, characterised in that the contacts (1-8) are disposed some on each side of an insulating separator (17) which forms a dielectric between overlapping contacts.

8. An electrical connector as claimed in claim 7, characterised in that the insulating separator (17) is a polyimide film.

9. An electrical connector as claimed in claim 7 or 8, characterised in that the contacts are formed as part of a plurality of lead frames (10,11) stamped from a sheet of conductive material, which lead frames are mounted on opposite sides of the insulating separator (17).

10. An electrical connector as claimed in claim 9, characterised in that one end of the contacts is fork shaped forming an insulation displacement connector (22).

11. An electrical connector as claimed in claim 10, characterised in that the other end of each of the contacts is an elongate tail (12).

12. An electrical connector as claimed in claim 11, characterised in that the insulating separator (17) with the lead frames (11,12) mounted thereon is encapsulated in a plastics material (20) with the contact ends extending therefrom.

13. An electrical connector as claimed in claim 12, characterised in that the ends defining insulation displacement connectors (22) are bent upwardly substantially at right angles and the tails (12) are bent downwardly and backwardly of the encapsulation (20).

14. An electrical connector as claimed in claim 13, characterised in that the encapsulation of plastics material is formed as a rectangular block (20) with individual slots (21) extending substantially mutually parallel in line with the insulation displacement connectors (22) for receipt of the end of a wire to be terminated.

15. An electrical connector as claimed in claim 14, characterised in that an insulating housing (24) is provided which is shaped to receive the rectangular block (20) by slidable insertion of the end carrying the tails (12), which housing has slots (26) spaced similarly to the tails (12) where they project from the block (20) so as each to receive a tail therein, as the tail end of the block is inserted, and to guide and separate the tails during and after insertion, the tails being held in inclined disposition as contacts in an aperture at the opposite side of the housing for receiving a mating connector.

16. An electrical connector as claimed in claim 15, characterised in the provision of an insulating strain relief element (23) of rectangular shape similar to the rectangular block (20)and with slots (24A) similar thereto for receiving and supporting the insulation displacement connector ends (22) and forming effectively a continuation of the block such that it is slidable with the block (20) into the housing (24).

17. An electrical connector as claimed in claim 15 or 16, characterised in that the housing (24) and the block (20), or strain relief element (23), are provided with cooperating latching portions (27,28) which retain the block or block and strain relief element in the housing.

18. An electrical connector as claimed in 15, 16, or 17, characterised in that the housing 24) is open topped and is provided with a lid (29) which is closable onto the housing and has formations (32) which engage insulated wires when laid in the slots (21) in the block, or block and strain relief member (23), and force the wires each into an insulation displacement connector.

19. An electrical connector as claimed in claim 18, characterised in that the lid (29) is hingedly mounted (30) on the housing (24).

20. An electrical connector as claimed in claim 19, characterised in that an outer shell (33) is provided into which the housing (24) is a force fit the insertion of the housing therein being effective to close the lid (29) and to cause the formations (32) thereon to engage the insulated wires and force them each into one of the insulation displacement connectors (22).

21. An electrical connector as claimed in claim 20, characterised in that the outer shell (33) is formed from a metal.

22. An electrical connector as claimed in any one of claims 13 to 21, characterised in that the forks of the insulation displacement connectors (22) extend to different heights such that some come into contact with their particular insulated wire at a different time and insulation displacement is effected progressively by downward pressure thereby to reduce the necessary connecting force.

## Patentansprüche

1. Elektrischer Verbinder mit mindestens vier Kontakten (3, 4, 5, 6), die sich zwischen Eingangs- und Ausgangsklemmen (12, 13) erstrecken, **dadurch gekennzeichnet**, dass ein Überlappen der am weitesten voneinander entfernten Kontakte (3 und 5, 4 und 6) verschiedener bestimmter, zugeordnete Signale führender Paare der Kontakte (4 & 5, 3 & 6) vorgesehen ist, um eine kapazitive Kopplung zwischen ihnen vorzusehen, damit Nebensprechen induziert wird, das entgegengesetzt zum zwischen den einander nächsten Kontakten (3 & 4, 5 & 6) der verschiedenen, zugeordnete Signale führenden Paare induzierten Nebensprechen ist, um das Gesamtnebensprechen zu verringern.

2. Elektrischer Verbinder nach Anspruch 1, dadurch gekennzeichnet, dass einer (3, 6) der am weitesten voneinander auseinanderliegenden Kontakte (3 & 5, 4 & 6) mit einer seitlichen Verlängerung versehen ist, die den anderen zusammenwirkenden Kontakt (5, 4) des anderen Paares überdeckt, um ein Überlappen und eine kapazitive Kopplung zwischen ihnen vorzusehen.

3. Elektrischer Verbinder nach Anspruch 2, dadurch gekennzeichnet, dass der andere (5, 4) der am weitesten voneinander entfernten Kontakte (3 & 5, 4 & 6) einen Bereich (15C, 15B) größerer Fläche besitzt, die die seitliche Verlängerung (16C, 16B) überdeckt, wodurch die kapazitive Kopplung zwischen ihnen erhöht ist.

4. Elektrischer Verbinder nach Anspruch 2 oder 3, dadurch gekennzeichnet, dass die Kontakte (3, 4, 5, 6) quer zum Verbinder in einem Abstand angeordnet sind, wobei die am weitesten voneinander entfernten Kontakte (3, 6) für ein Signal tragendes Paar eingesetzt sind und die seitliche Verlängerung (16C, 16B) sich nach Innen erstreckt.

5. Elektrischer Steckverbinder nach einem der vorhergehenden Ansprüche, mit einer Vielzahl von Kontakten, dadurch gekennzeichnet, dass jeweils vier oder mehr Kontakte paarweise ausgewählt und mit einer Überlappung der am weitesten voneinander entfernten Kontakte des anderen Paares oder Paare versehen sind, um so eine kapazitive Kopplung zwischen ihnen vorzusehen, damit ein Nebensprechen induziert ist, das entgegengesetzt zum zwischen den einander nächsten Kontakten des anderen Paares oder Paare induzierten Nebensprechen induziert ist.

6. Elektrischer Verbinder nach Anspruch 4 oder 5, dadurch gekennzeichnet, dass zwei zusätzliche, Signale führende Paare von Kontakten (1 & 2, 7 & 8) jeweils einer an jeder Seite der vier Kontakte (3, 4, 5, 6) angeordnet sind und die anderen Kontakte (3, 6) der vier Kontakte derart angeordnet sind, dass sie dem am weitesten entfernten Kontakt (1, 8) des nächsten zusätzlichen Paares überlappen, um so eine Kopplung zwischen ihnen vorzusehen, die ein Nebensprechen induziert, das demjenigen Nebensprechen entgegengerichtet ist, welches zwischen dem äußeren Kontakt (3, 6) und der nächsten Klemme (2, 7) des zusätzlichen Paares (1 & 2, 7 & 8) induziert ist.

7. Elektrischer Verbinder nach einem der vorhergehenden Ansprüche, dadurch gekennzeichnet, dass die Kontakte (1 bis 8) teilweise an jeder Seite eines isolierenden Trennelements (17) angeordnet sind, das ein Dialektrikum zwischen den überlappenden Kontakten bildet.

8. Elektrischer Verbinder nach Anspruch 7, dadurch gekennzeichnet, dass das isolierende Trennelement (17) eine Polyimidfolie ist.

9. Elektrischer Verbinder nach Anspruch 7 oder 8, dadurch gekennzeichnet, dass die Kontakte als Teil einer Vielzahl von Leiterrahmen (10, 11), die aus einem Blech aus leitendem Material gestanzt sind, gebildet sind, welche Leiterrahmen an entgegengesetzten Seiten des isolierenden Trennelements (17) gehalten sind.

10. Elektrischer Verbinder nach Anspruch 9, dadurch gekennzeichnet, dass ein Ende der Kontakte gabelförmig ist und einen Isolationsverdrängungs-Verbinder (22) bildet.

11. Elektrischer Verbinder nach Anspruch 10, dadurch gekennzeichnet, dass das andere Ende jedes Kontaktes einen verlängerten Schweif (12) besitzt.

12. Elektrischer Verbinder nach Anspruch 11, dadurch gekennzeichnet, dass das isolierende Trennelement (17) mit den damit befestigten Leiterrahmen (12, 11) in ein Kunststoffmaterial (20), aus dem heraus sich die Kontaktenden erstrecken, eingekapselt ist.

13. Elektrischer Verbinder nach Anspruch 12, dadurch gekennzeichnet, dass die Enden, die den Isolationsverdrängungs-Verbinder (22) bilden, im wesentlichen rechtwinklig nach oben gebogen und die Schweife (12) nach unten und hinten gegenüber der Einkapselung (20) gebogen sind.

14. Elektrischer Verbinder nach Anspruch 13, dadurch gekennzeichnet, dass die Einkapselung aus Kunststoffmaterial als rechteckiger Block (20) mit einzelnen Schlitzen (21) gebildet ist, die sich im wesentlichen zueinander parallel in einer Linie mit den Isolationsverdrängungs-Verbindern (22) zur Aufnahme des Endes eines zu verbindenden Drahtes erstrecken.

15. Elektrischer Verbinder nach Anspruch 14, dadurch gekennzeichnet, dass ein Isoliergehäuse (24) vorgesehen ist, das zur Aufnahme des rechteckigen Blocks (20) durch gleitbares Einstecken des die Schweife (12) tragenden Endes gebildet ist, dass das Gehäuse Schlitze (26) besitzt, die den vom Block (20 vorstehenden Schweifen (12) entsprechend beabstandet sind und so jeweils einen Schweif in sich aufnehmen, wenn das Schweifende des Blocks eingesteckt ist, und um die Schweife während und nach dem Einstecken zu führen und zu trennen, wobei die Schweife in geneigter Anordnung als Kontakte in einer Öffnung an der gegenüberliegenden Seite des Gehäuses zur Aufnahme eines passenden Verbinders gehalten ist.

16. Elektrischer Verbinder nach Anspruch 15, gekennzeichnet durch das Vorsehen eines isolierenden Zugentlastungselementes (23) rechteckiger Form ähnlich dem rechteckförmigen Block (20) und mit Schlitzen (24A) zum Aufnehmen und Halten der Isolationsverdrängungs-Verbinderenden (22) und zum wirksamen Bilden einer Fortsetzung des Blocks derart, dass es mit dem Block (20) in das Gehäuse (24) einschiebbar ist.

17. Elektrischer Verbinder nach Anspruch 15 oder 16, dadurch gekennzeichnet, dass das Gehäuse (24) und der Block (20) oder das Zugentlastungselement (23) mit zusammenwirkenden Verriegelungsteilen (27, 28) versehen sind, die den Block oder den Block und das Zugentlastungselement im Gehäuse halten.

18. Elektrischer Verbinder nach Anspruch 15, 16 oder 17, dadurch gekennzeichnet, dass das Gehäuse (24) oben offen ist und mit einem Deckel (29) versehen ist, der auf dem Gehäuse verschließbar angeordnet ist und Vorsprünge (32) besitzt, die isolierte Drähte erfassen, wenn sie in den Schlitzen (21) des Blocks oder des Blocks und des Zugentlastungselementes (23) liegen und die Drähte jeweils in einen Isolationsverdrängungs-Verbinder drücken.

19. Elektrischer Verbinder nach Anspruch 18, dadurch gekennzeichnet, dass der Deckel (29) am Gehäuse (24) angelenkt (30) gehalten ist.

20. Elektrischer Verbinder nach Anspruch 19, dadurch gekennzeichnet, dass eine äußere Hülle (33) vorgesehen ist, in welche das Gehäuse (24) kraftschlüssig eingepasst ist, wobei das Einsetzen des Gehäuses das Schließen des Deckels (29) und ferner bewirkt, dass die Vorsprünge (32) die isolierten Drähte erfassen und sie jeweils in einen der Isolationsverdrängungs-Verbinder (22) drückt.

21. Elektrischer Verbinder nach Anspruch 20, dadurch gekennzeichnet, dass die äußere Hülle (33) aus einem Metall gebildet ist.

22. Elektrischer Verbinder nach einem der Ansprüche 13 bis 21, dadurch gekennzeichnet, dass die Gabeln der Isolationsverdrängungs-Verbinder (22) sich über verschiedene Höhen derart erstrecken, dass einige mit ihrem bestimmten isolierten Draht zu unterschiedlichen Zeitpunkten in Kontakt gelangen und die Isolationsverdrängung durch nach unten Drücken progressiv bewirkt wird, um dadurch die notwendige Verbindungskraft zu verringern.

## Revendications

1. Connecteur électrique comprenant au moins quatre contacts (3,4,5,6) s'étendant entre des bornes d'entrée et de sortie (12,13), caractérisé en ce qu'un chevauchement des contacts (3 & 5, 4 & 6), réciproquement les plus distants, de différents couples particuliers affectés desdits contacts (4 & 5, 3 & 6) de transmission de signaux est agencé de manière à établir un couplage capacitif entre ces contacts pour induire une diaphonie en opposition à une diaphonie induite entre les contacts (3 & 4, 5 & 6), réciproquement les plus proches, des différents couples affectés véhiculant des signaux pour réduire la diaphonie globale.

2. Connecteur électrique selon la revendication 1, caractérisé en ce que l'un (3,6) de chacun desdits contacts les plus distants (3 & 5, 4 & 6) est pourvu d'une extension latérale, qui recouvre l'autre contact coopérant (5,4) de l'autre couple pour établir un chevauchement et un couplage capacitif entre eux.

3. Connecteur électrique selon la revendication 2, caractérisé en ce que l'autre desdits contacts les plus distants (5,4) possède une partie (15C, 15B) ayant une plus grande étendue en surface, au niveau de laquelle l'extension latérale (16C,16B) est en recouvrement, de manière à accroître le couplage capacitif entre eux.

4. Connecteur électrique selon la revendication 2 ou 3, caractérisé en ce que les contacts (3,4,5,6) sont espacés dans le sens transversal du connecteur, ceux des contacts (3,6), qui sont réciproquement les plus distants, étant affectés en tant que couple véhiculant les signaux, et l'extension latérale (16C,16B) s'étendant vers l'intérieur.

5. Connecteur électrique selon l'une quelconque des revendications précédentes comprenant une multiplicité de contacts, caractérisé en ce que quatre quelconques ou plus desdits contacts sont sélectionnés en tant que couples et sont en chevauchement avec les contacts, réciproquement les plus distants, de l'autre couple ou des autres couples, pour établir un couplage capacitif entre eux afin d'induire une diaphonie en opposition à une diaphonie induite entre les contacts réciproquement les plus proches de l'autre couple ou des autres couples.

6. Connecteur électrique selon la revendication 4 ou 5, caractérisé en ce que deux couples supplémentaires de contacts (1 & 2, 7 & 8) de transmission des signaux sont disposés respectivement de chaque côté desdits quatre contacts (3,4,5,6), et les contacts extérieurs (3,6) desdits quatre contacts sont disposés de manière à chevaucher le contact le plus distant (1,8) du couple supplémentaire le plus proche pour établir un couplage entre eux afin d'induire une diaphonie en opposition à la diaphonie induite entre ce contact extérieur (3,6) et la borne la plus proche (2,7) de ce couple supplémentaire (1 & 2, 7 & 8).

7. Connecteur électrique selon l'une quelconque des revendications précédentes, caractérisé en ce que quelques-uns des contacts (1-8) sont disposés de chaque côté d'un séparateur isolant (17), qui forme un diélectrique entre les contacts en chevauchement.

8. Connecteur électrique selon la revendication 7, caractérisé en ce que le séparateur isolant (17) est un film de polyimide.

9. Connecteur électrique selon la revendication 7 ou 8, caractérisé en ce que les contacts sont agencés en tant que partie de la pluralité de cadres de montage (10, 11) formés par estampage d'une feuille de matériau conducteur, lesquels cadres de montage sont montés sur des côtés opposés du séparateur isolant (17).

10. Connecteur électrique selon la revendication 9, caractérisé en ce qu'une extrémité des contacts est agencée en forme de fourche en formant un connecteur à déplacement d'isolant (22).

11. Connecteur électrique selon la revendication 10, caractérisé en ce que l'autre extrémité de chacun des contacts est une queue allongée (12).

12. Connecteur électrique selon la revendication 11, caractérisé en ce que le séparateur isolant (17), sur lequel sont montés les cadres de montage (11,12), est enrobé dans une matière plastique (20), d'où sortent les extrémités de contact.

13. Connecteur électrique selon la revendication 12, caractérisé en ce que les extrémités définissant des connecteurs à déplacement d'isolant (22) sont coudées vers le haut sensiblement à angle droit et que les queues (12) sont coudées vers le bas et vers l'arrière de l'encapsulation (20).

14. Connecteur électrique selon la revendication 13, caractérisé en ce que l'encapsulation en matière plastique est agencée sous la forme d'un bloc rectangulaire (20) pourvu de fentes individuelles (21) qui sont sensiblement parallèles entre elles en étant alignées avec les connecteurs à déplacement d'isolant (22) pour recevoir l'extrémité d'un fil devant être connecté.

15. Connecteur électrique selon la revendication 14, caractérisé en ce qu'il est prévu un boîtier isolant (24), qui est conformé de manière à recevoir le bloc rectangulaire (20) moyennant une insertion par glissement de l'extrémité portant les queues (12), lequel boîtier comporte des fentes (26) espacées d'une manière similaire aux queues (12), lorsqu'elles font saillie hors du bloc (20), de manière à loger chacune une queue, lors de l'insertion de l'extrémité du bloc portant les queues, et guider et séparer les queues pendant et après l'insertion, les queues étant maintenues dans une position inclinée sous la forme de contacts dans une ouverture sur le côté opposé du boîtier pour recevoir un connecteur apparié.

16. Connecteur électrique selon la revendication 15, caractérisé en ce qu'il est prévu un élément isolant (23) de détente de contrainte, possédant une forme rectangulaire similaire au bloc rectangulaire (20) et pourvu de fentes (24A) similaires à celles servant à recevoir et supporter les extrémités (22) des connecteurs à déplacement d'isolant et formant effectivement une continuation du bloc de telle sorte qu'il peut glisser avec le bloc (20) dans le boîtier (24).

17. Connecteur électrique selon la revendication 15 ou 16, caractérisé en ce que le boîtier (24) et le bloc (20) ou l'élément de détente de contrainte (22) sont pourvus de parties de verrouillage coopérantes (27,28), qui retiennent le bloc ou le bloc et l'élément de détente de contrainte dans le boîtier.

18. Connecteur électrique selon la revendication 15, 16 ou 17, caractérisé en ce que le boîtier (24) est ouvert à sa partie supérieure et comporte un couvercle (29), qui peut être fermé sur le boîtier et comporte des configurations (32) qui engrènent avec des fils isolés lorsqu'ils sont placés dans les fentes (21) aménagées dans le bloc, ou dans le bloc et dans l'élément de détente de contrainte (23), et repoussent chacun des fils dans un connecteur à déplacement d'isolant.

19. Connecteur électrique selon la revendication 18, caractérisé en ce que le couvercle (29) est monté de façon articulée (30) sur le boîtier (24).

20. Connecteur électrique selon la revendication 19, caractérisé en ce qu'il est prévu une coque extérieure (33), dans laquelle le boîtier (24) est monté à force, l'insertion du boîtier ayant pour effet de fermer le couvercle (29) et d'amener les configurations (32) formées sur le couvercle à s'engager contre les fils isolés et à repousser chacun d'eux dans l'un des connecteurs à déplacement d'isolant (22).

21. Connecteur électrique selon la revendication 20, caractérisé en ce que la coque extérieure (33) est formée d'un métal.

22. Connecteur électrique selon l'une quelconque des revendications 13 à 21, caractérisé en ce que les fourches des connecteurs à déplacement d'isolant (22) s'étendent à différentes hauteurs de sorte que certaines fourches viennent en contact avec leurs fils isolés particuliers, à des instants différents et qu'un déplacement de l'isolant est exécuté progressivement sous l'effet d'une pression descendante en réduisant ainsi la force de connexion nécessaire.
